## Europäisches Patentamt

(19) **European Patent Office**

**Office européen des brevets**

(11) Publication number: **0 140 995**
**B1**

(12) **EUROPEAN PATENT SPECIFICATION**

(45) Date of publication of patent specification: **16.06.87**

(21) Application number: **83112765.9**

(22) Date of filing: **19.12.83**

(51) Int. Cl.⁴: **F 16 L 37/12, F 16 L 37/08**

(54) Automatic snap-joint for piping.

(30) Priority: **26.10.83 IT 1265383**

(43) Date of publication of application:
**15.05.85 Bulletin 85/20**

(45) Publication of the grant of the patent:
**16.06.87 Bulletin 87/25**

(84) Designated Contracting States:
**AT BE CH DE FR GB LI LU NL SE**

(56) References cited:
**DE-A-1 936 766**
**DE-A-2 502 830**
**DE-C-1 775 302**
**FR-A-1 455 850**
**FR-A-2 015 349**
**US-A-4 026 581**

(73) Proprietor: **Rossi, Pietro**
**Via Ciro Menotti 22/11**
**I-37100 Verona (IT)**

(72) Inventor: **Rossi, Pietro**
**Via Ciro Menotti 22/11**
**I-37100 Verona (IT)**

(74) Representative: **Ferrarotti, Giovanni**
**Studio Consulenza Tecnica Dr. Ing. Giovanni**
**Ferrarotti Via Alla Porta Degli Archi 1/7**
**I-16121 Genova (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This Patent application covers an automatic snap-joint for pipes.

Various joint types are known by which pipes are coupled together. Usually they are consisting of a male and a female element, both connected to the end of the pipes to be joined.

The female element has mobile devices (balls, wedges, etc.) by which the male is locked into place during coupling and can be released for uncoupling.

Recent pipe joints are mostly automatic, i.e. coupling is achieved by threading the male into the female, while release (uncoupling) usually requires acting on an external stop ring to loosen the mobile devices.

This Patent application covers an automatic snap-joint in which the (normally four) mobile locking elements of the male are pushed by elastic devices. A similar solution is known under the Patent DE—C—1.775.302 in which the mobile elements are consisting in various V-shaped self-springy items or in compact bodies acting under the thrust of various feather keys, splines or springs.

This known solution has however the drawback, in common with other known solutions, of being difficult to mount on the female part of these mobile locking devices together with their elastic elements since each such mobile element has to be introduced in the related opening while taking care that they won't slip out during the installation of the other mobile elements, elastic devices and control ring.

Furthermore, this known solution with self-springy locking devices or with elastic thrust members also requires multiple-molding and, if the elastic item is incorporated in the clinching ring, it involves expensive and complex molds.

This invention has therefore the aim to eliminate these drawbacks so as to obtain an automatic snap-joint in which the mobile locking elements will automatically slip into their recesses while the configuration is such as to require only one molding operation.

In this invention, the various mobile locking elements are T-shaped member presenting two lateral expansions; all these T-shaped members have a flexible and elastic shank connected to one single annular base. In this way, the various mobile locking elements (usually four) are molded in one single operation and they are mounted on the female body by axial fitting so that the heads will slip into their recesses and will stay put, this reducing the production and assembly costs.

The invention in question is exemplified in the enclosed drawings, in which:

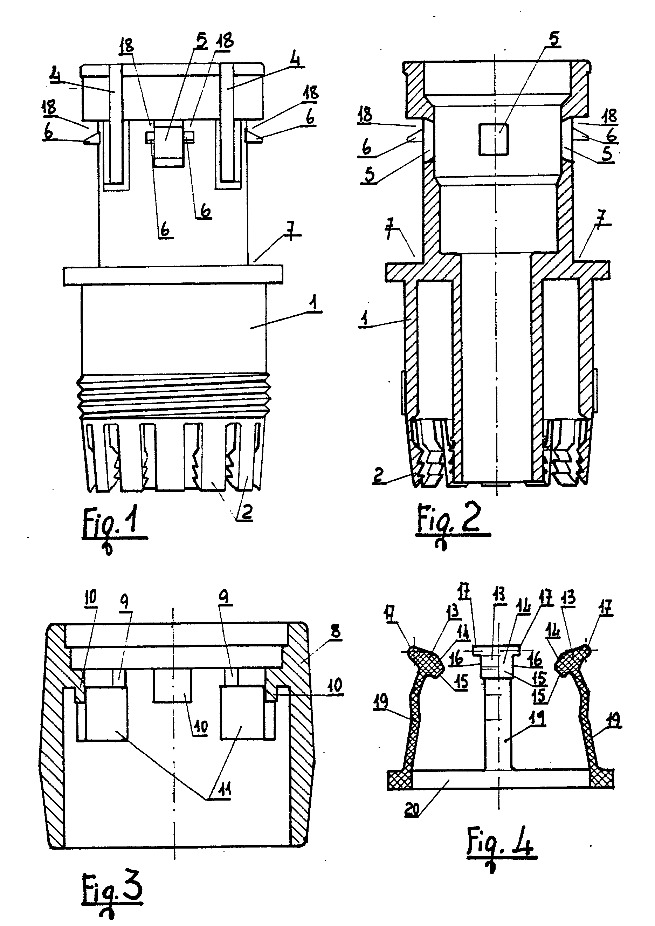

Fig. 1 shows a lateral view of the female part of the joint;

Fig. 2 shows an axial section of the female body illustrated in Fig. 1;

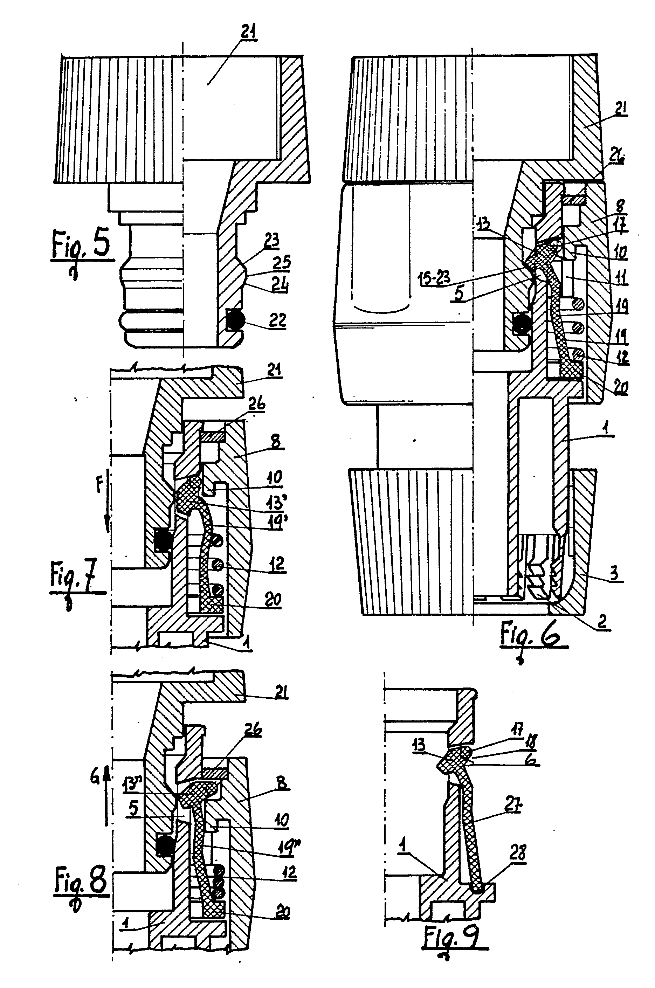

Fig. 3 shows an axial section of the stop ring;

Fig. 4 shows an axial section of the mobile locking assembly of the male;

Fig. 5 shows a lateral view and partial section of the male connector;

Fig. 6 shows a lateral view and partial section of the snap-joint assembly;

Fig. 7 shows a partial section of the joint during its automatic coupling;

Fig. 8 shows a partial section of the joint during its uncoupling (release);

With reference to these Figures, 1 shows the hollow female body fitted at its lower end with connecting devices either consisting of coupling claws 2 tightened by a threaded sleeve 3 (as shows for exemplification) or of an internal and external screw threaded onto which the threaded pipe fitting or any other pipe coupling is screwed.

The upper part of the female 1 features longitudinal recesses 4 acting as guides for the locking ring described elsewhere, as well as openings or windows 5, usually four, with parallel vertical walls and slightly inwards converging upper and lower horizontal walls. Triangular shaped projections 6 are located near these openings 5, the function of which will be explained hereinafter. In the central part of the body 1 is an annular shoulder 7 on which the locking assembly is resting.

The stop ring 8 has an internal longitudinal guide 9 rib, penetrating in the corresponding recess 4 of the female, with L shaped teeth 10 acting as catches for the locking elements and supports 11 against which the spiral spring 12 is acting, keep the stop ring in rest position.

The locking elements 13 (for instance four) are T-shaped member with flat and converging inner surfaces 14, 15, on which the male joint is acting, whereas the lateral surfaces 16 are flat and parallel to the sides of the windows or openings 5. Two short cylindrical sections 17 are branching off from the top of these lateral surfaces 16. These locking devices are housed in the related "windows" 5 of the female joint 1 while the cylindrical expansions 17 are lodged in the recesses 18 machined between the female body and the triangular shaped projections 6. Each locking element 13 is connected by an elastic and flexible shank 19 to an annular ring 20 usually having a rectangular or square section. These shanks 19 are properly S-shaped to facilitate the necessary elastic deformation.

The hollow male 21 of known configuration features a truncated cone shaped annular expansion, consisting of the raking upper surfaces 23, lower surface 24 and central cylindrical surface 25, in addition to the sealing ring 22, these raking surfaces 23 and 24 having virtually the same inclination as the lower 15 and upper surface 14 of the locking device 13.

The assembly of the joint in question, illustrated in Fig. 6 is therefore clearly explained by the foregoing. Particular attention should be paid to the simple assembly of the locking elements axially slipped over the female until the ring 20 is resting on the shoulder 7; through this arrangement, the locking devices 13 are automatically penetrating in the related openings 5 where they remain, thus facilitating the assembly of the other accessories (spring 12, stop ring 8 and gear lock 26) on the female part.

The Figures 6, 7 and 8 are showing how this joint is working. In Fig. 6, the coupling joint is engaged and the male 21 is locked in the female 1; locking is ensured by the lower surface 15 of the T-shaped member 13 resting on the upper surface 23 of the expansion of the male 21; in this condition, the locking device 13 is kept in place by the upside down L shaped tooth 10 of the stop ring 8 in rest position.

Automatic coupling of the male 21 inside the female 1 is illustrated in Fig. 7. When pushing the male 21 in the direction of the arrow F, the lower surface 24 of the male expansion will press against the upper edge 14 of the locking device 13 causing it to turn into the position 13' with its lateral cylindrical sections in the recess 18.

At the same time, the shank is elastically stressed out of shape into the position 19'.

This elastic deformation permits the male easily to penetrate into the recess and as soon as its surface 23 is matching the surface 15 of the locking device, the assembly is locked into place.

To release the coupling, the stop ring 8 is lowered against the bias of the spring 12 as shown in Fig. 8; this movement will also lower the tooth 10, releasing the back of the locking device 13 so that it can move backwards into the position 13'', with deformation of the shank in its position 19'' as it is pushed by the surface 23 of the male against the surface 15 of the locking device. The male can thus be easily removed in the direction of the arrow G and, after the stop ring has been freed, the latter will take on its rest position, ready for the next automatic coupling.

## Claims

1. Automatic snap-joint for pipes consisting of a hollow female body (1), a hollow male body (21), a stop ring (8) surrounding the female body and controlled by the action of a spring (12) and locking devices (13), while the female body has "windows" or "openings" (5) in which to introduce portions of these locking devices (13) keeping the male coupled, thus ensuring automatic coupling and uncoupling of the joint; the male body (21) having an annular expansion with truncated cone shape sections (23, 24, 25) while the lock ring has teeth (10) locking and releasing the locking devices (13), the "windows" (5) having parallel longitudinally extending walls while their opposite transverse walls are converging inwards and characterized in that portions of the parallel walls are extended outwardly to form lateral projections (6) with triangular cross section in the longitudinal plane creating recesses (18) with an adjacent part of the female body (1), and that the locking devices comprise members (13) having a T-shaped configuration with the head of the T extending transversely of the joint and with the inner arm of the head of the T having flat and inwards converging surfaces (14, 15) and flat parallel lateral surfaces (16) from which two short cylindrical sections (17) branch off, designed to fit into and rotate in the recesses (18), each T-shaped member (13) being connected to a common circular ring (20) by means of the stem of the T which comprises an elastic and flexible shank (19), the ring (20) being supported by a shoulder (7) of the female body (1), while the teeth (10) of the stop ring (8) have the configuration of an inverted L, so that the locking devices (13) can be axially mounted on the female body (1), and the inner arms of the heads of the Ts automatically slip into the related windows (5) or openings, due to the elasticity of the shank thus ensuring automatic coupling of the male (21) and female (1) joints without acting on the ring (8), by simple reaction of the T-shaped member (13) and elastic deformation of the shank (19) whereas uncoupling is accomplished by moving the stop ring (8) and teeth (10) so that the T-shaped member (13) can move backwards and the shanks (19) will be subjected to elastic deformation.

2. Automatic snap-joint for pipes, as described in claim No. 1, characterized by the fact that the upper (14) and lower (15) converging surfaces of the locking device (13) have virtually the same inclination as the lower (24) and upper (23) surfaces of the male expansion (21).

## Patentansprüche

1. Automatische Verschlußkupplung für Rohre, bestehend aus einem hohlen Aufnahmekörper (1), einem hohlen Steckkörper (21), einem Haltering (8), der den Aufnahmekörper umgibt und unter der Wirkung einer Feder (12) steht, sowie Verriegelungsvorrichtungen (13), wobei der Aufnahmekörper Fenster oder öffnungen (5) aufweist, in dem zum Halten des Steckkörpers in der gekuppelten Stellung Teile der Verriegelungsvorrichtungen (13) einrasten, so daß ein automatisches Ein- und Entkuppeln der Kupplung erreicht wird; der Steckkörper (21) besitzt eine ringförmige Verstärkung mit kegelstumpfförmigen Teilen (23, 24, 25), der Haltering weist Zähne (10) auf, die die Verriegelungsvorrichtungen (13) verriegeln und lösen, und die Fenster (5) besitzen parallele Längswände sowie gegenüberliegende, nach innen konvergierende Querwände, dadurch gekennzeichnet, daß sich Teile der parallelen Längswände nach außen erstrecken, um seitliche Vorsprünge (6) mit einem in der Längsebene dreieckförmigen Querschnitt zu formen, so daß zwischen den Vorsprüngen und dem anschließenden Teil des Aufnahmekörpers (1) Ausnehmungen (18) gebildet sind, daß die Verriegelungsvorrichtungen Teile (13) mit einer T-förmigen Gestalt aufweisen, wobei sich der Kopf des T quer zu Kupplung erstreckt und der innere Arm des Kopfes des T ebene und nach innen konvergierende Flächen (14, 15) sowie ebene und parallele Seitenflächen (16) aufweist, von denen zwei kurze zylindrische Teile (17) abstehen, die zum Eintritt in die und zur Drehung in den Ausnehmungen (18) ausgebildet sind; jeder T-förmige Teil (13) ist mittels des, einen elastischen und flexiblen Schaft (19) aufweisenden T-Fußes mit einem gemeinsamen kreisförmigen Ring (20) verbunden, der an einer Schulter (7) des Aufnahmekörpers (1) gelagert ist; die Zähne (10) des Halteringes (8) weisen die Gestalt eines umgekehrten L auf, so daß die Verriegelungsvorrichtungen (13) axial am Aufnahmekörper (1) montierbar sind und die inneren Arme der Köpfe der T s zufolge der Elastizität des Schaftes automatisch in die entprechenden Fenster (5) oder öffnungen gleiten, wodurch ein automatisches Kuppeln des Steckkörpers (21) und des Aufnahmekörpers (1) erreicht wird, und zwar ohne Betätigung am Ring (8) durch einfache Reaktion des T-förmigen Teiles (13) und elastische Verformung des Schaftes (19), wogegen die Entkupplung durch Bewegen des Halteringes (8) und der Zähne (10) erfolgt, wobei der T-förmige Teil (13) rückwärts bewegt und der Schaft (19) elastisch verformt wird.

2. Automatische Verschlußkupplung für Rohre nach Anspruch 1, dadurch gekennzeichnet, daß die oberen (14) und unteren (15) konvergierenden Flächen der Verriegelungsvorrichtung (13) im wesentlichen die gleiche Neigung aufweisen wie die unteren (24) und oberen (23) Flächen der Verstärkung des Steckkörpers (21).

**Revendications**

1. Raccord automatique du type rapide pour tuyaux, comprenant une partie femelle creuse (1), une partie mâle creuse (21), une bague d'arrêt (8) entourant la partie femelle et commandée par l'action d'un ressort (12), et de dispositifs de verrouillage (13), tandis que la partie femelle comprend des "fenêtres" on "ouvertures" (5) dans lesquelles pénètrent des portions de ce dispositif de verrouillage (13) en maintenant la partie mâle couplée, en assurant ainsi le couplage et le découplage automatique du raccord; la partie mâle (21) ayant un prolongement annulaire, avec des sections de forme tronconique (23, 24, 25), tandis que la bague de verrouillage comprend des dents (10) verrouillant et dégageant les dispositifs du verrouillage (13), les "fenêtres" (5) ayant des parois parallèles orientées longitudinalement, tandis que leurs parois transversales opposées convergent vers l'intérieur, caractérisé en ce que des portions de parois parallèles sont prolongées vers l'extérieur pour former des prolongements latéraux (6) de section triangulaire dans le plan longitudinal, en créant des logements (18) avec une portion adjacente de la partie femelle (1), et en ce que les dispositifs de verrouillage comprennent des éléments (13) ayant une forme de T avec la barre du T orientée transversalement par rapport au raccord, et avec le bras intérieur de la barre du T ayant des surfaces plates convergentes vers l'intérieur (14, 15) et des surfaces latérales plates parallèles (16) à partir desquelles deux courtes sections cylindriques (17) dépassent vers l'extérieur, conçus pour s'adapter et tourner dans les logements (18), chaque élément en forme de T (15) étant connecté à une bague circulaire commune (20) au moyen de la tige du T qui constitue une tige élastique souple (19), la bague (20) étant supportée par un épaulement (7) de la partie femelle (1), tandis que les dents (10) de la bague d'arrêt (8), ont la forme d'un L inversé, si bien que les dispositifs de verrouillage (13) peuvent être montés axialement sur la partie femelle (1), et que les bras intérieurs des barres des T glissent automatiquement dans les fenêtres (5) ou ouvertures correspondantes, du fait de l'élasticité de la tige, en assurant ainsi le couplage automatique des raccords mâle (21) et femelle (1), sans agir sur la bague (8), par simple réaction de l'élément en forme de T (13) et déformation élastique de la tige (19), tandis que le découplage est obtenu en déplaçant la bague d'arrêt (8) et les dents (10) de façon que l'élément en forme de T (13) puisse reculer et que les tiges (19) soient soumises à une déformation élastique.

2. Raccord automatique du type rapide pour tuyaux, selon la revendication 1, caractérisé en ce que les surfaces convergentes supérieure (14) et inférieure (15) du dispositif de verrouillage (13) ont pratiquement la même inclinaison que les surfaces inférieure (24) et supérieure (23) du prolongement de la partie mâle (21).

Fig. 1

Fig. 2

Fig. 3

Fig. 4

Fig. 5

Fig. 6

Fig. 7

Fig. 8

Fig. 9